(19) Europäisches Patentamt
European Patent Office
Office européen des brevets

(11) Veröffentlichungsnummer : **0 061 998**
**B1**

(12) # EUROPÄISCHE PATENTSCHRIFT

(45) Veröffentlichungstag der Patentschrift : **03.04.85**

(51) Int. Cl.⁴ : **C 09 B 45/14**, D 06 P 3/32, D 06 P 3/30

(21) Anmeldenummer : **82810122.0**

(22) Anmeldetag : **17.03.82**

(54) **Verwendung von 1 : 2-Chrom- oder -Kobaltkomplexfarbstoffen zum Färben von Leder oder Pelzen.**

(30) Priorität : **23.03.81 CH 1952/81**

(43) Veröffentlichungstag der Anmeldung : **06.10.82 Patentblatt 82/40**

(45) Bekanntmachung des Hinweises auf die Patenterteilung : **03.04.85 Patentblatt 85/14**

(84) Benannte Vertragsstaaten : **CH DE FR GB IT LI**

(56) Entgegenhaltungen :
**DE-C- 600 250**
**FR-A- 1 220 724**
**FR-A- 1 246 903**
**FR-A- 2 433 036**
**US-A- 3 185 676**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Postfach**
**CH-4002 Basel (CH)**

(72) Erfinder : **Püntener, Alois, Dr.**
**Pulverweg 13**
**CH-4310 Rheinfelden (CH)**

EP 0 061 998 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft die Verwendung von Farbstoffen, der Formel I

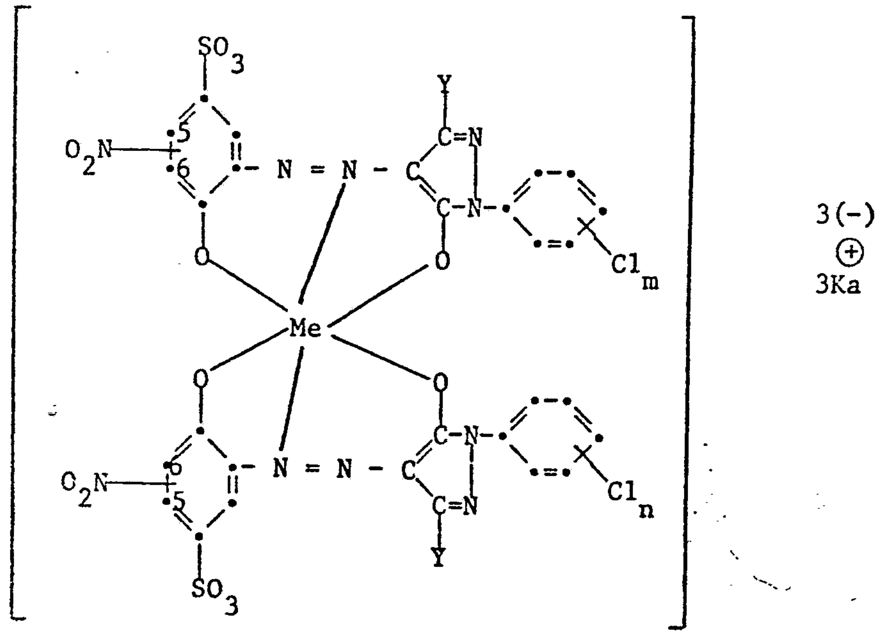

(I)

worin Me Chrom oder Kobalt, Ka⊕ ein Kation, m 1 oder 2, n 0, 1 oder 2 und Y Methyl, —$CONH_2$ oder —CO—NH—R bedeuten, wobei R eine Alkylgruppe mit 1-4 C-Atomen darstellt und die Nitrogruppen in 5- oder 6-Stellung angeordnet sind, zum Färben von Leder oder Pelzen.

Ka⊕ stellt ein Kation, beispielsweise ein Alkalikation, wie Lithium, oder vorzugsweise Natrium oder Kalium, dar.

Ferner kann Ka⊕ ein Ammoniumkation oder das Ammoniumsalz eines organischen Amins sein.

Die Nitrogruppen sind vorzugsweise in 6-Stellung angeordnet.

Vorzugsweise bedeuten n und m jeweils 1 und das Chlor ist bevorzugt in m-Stellung gebunden.

Die Alkylgruppe R kann geradkettig oder verzweigt sein. Es handelt sich um Methyl, Ethyl, n-Propyl, iso-Propyl, n-Butyl, iso-Butyl oder tert.-Butyl. Vorzugsweise ist R Methyl.

In bevorzugten Farbstoffen ist Y Methyl und der Phenylrest am Pyrazolon trägt ein Chlor in m-Stellung.

Geeignete Pyrazolone für die Farbstoffe der oben angegebenen Formel I sind z. B. 1-Phenyl-3-methylpyrazol-5-on, 1-(2'-, 3'- oder 4'-chlorphenyl)-3-methylpyrazol-5-on, 1-(2',5'- oder 2',3'- oder 3',4'-Dichlorphenyl)-3-methylpyrazol-5-on oder 1-Phenyl-3-carbonamido-pyrazol-5-on. Besonders bevorzugt unter diesen ist 1-(3'-chlorphenyl)-3-methylpyrazol-5-on.

Die 1 : 2-Chrom- oder -Kobaltkomplexe werden auf übliche Weise hergestellt, z. B. indem man die metallfreien Azofarbstoffe im Verhältnis 1 : 2 mit einem chrom- oder kobaltabgebenden Mittel umsetzt, beispielsweise mit Kobaltsulfat oder -acetat oder Chromsulfat oder -formiat in schwach alkalischer, neutraler oder schwach saurer Lösung.

Die oben erwähnten einfachen Salze können auch in Gegenwart von Komplexbildnern, wie z. B. Weinsäure, Salicylsäure oder Milchsäure, oder als Komplexsalze, wie Chromsalicylsäure, verwendet werden. Die metallabgebenden Mittel werden in stöchiometrischer Menge oder im Ueberschuss eingesetzt. Es können Gemische oder einheitliche Monoazofarbstoffe metallisiert werden. Im ersten Fall erhält man ein Gemisch von symmetrischen und asymmetrischen Metallkomplexen. Reine asymmetrische Komplexe erhält man, indem man nach bekannter Methode zuerst den 1 : 1 Komplex und dann mit weiterem Monoazofarbstoff den entsprechenden 1 : 2 Komplex herstellt. Gewünschtenfalls können auch Gemische von metallabgebenden Mitteln eingesetzt werden.

Die 1 : 2-Chrom- oder -Kobaltkomplexe werden zum Färben von Pelzen oder vorzugsweise von Leder verwendet, wobei alle Ledersorten geeignet sind, z. B. Chromleder, nachgegerbtes Leder oder Velourleder von Ziege, Rind oder Schwein.

Man erhält rote, rotbraune oder gelbrote Färbungen sehr guter Echtheiten, insbesondere Licht- und Nassechtheiten.

Die bevorzugte Verwendung der Farbstoffe liegt im Färben von Leder mit Farbstoffmischungen, insbesondere im Gemisch mit einem blauen und einem gelben oder gelb-braunen 1 : 2-Metallkomplex-Farbstoff, womit erstmals das Trichromiefärben von Leder ermöglicht wird. Als blaue Farbstoffe werden in diesem Zusammenhang auch die grauen oder violetten Farbstoffe bezeichnet.

Vorzugsweise verwendet man eine Farbstoffmischung, enthaltend

a) einen roten, rotbraunen oder gelbroten 1 : 2-Chrom- oder Kobaltkomplex der oben angegebenen Formel I,

b) einen blauen 1 : 2-Chrom- oder Kobaltkomplex des Farbstoffes der Formel II

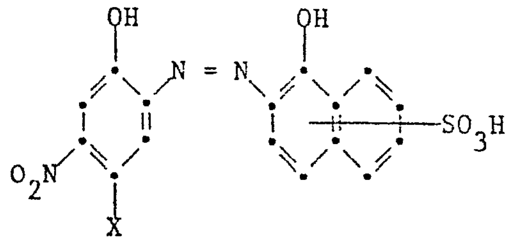

(II)

worin X Wasserstoff, Chlor, Methyl oder Methoxy bedeutet, sowie

c) einen gelben 1 : 2-Kobaltkomplex des Farbstoffes der Formel III

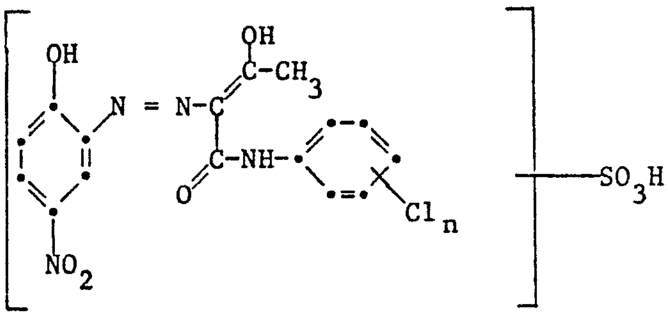

(III)

worin n eine ganze Zahl von 0 bis 2 bedeutet, oder einen gelb-braunen 1 : 2-Kobaltkomplex des Farbstoffes der Formel IV

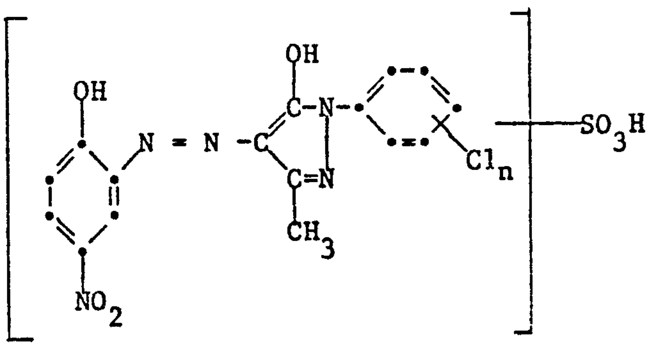

(IV)

worin n die oben angegebene Bedeutung hat.

Die FR-A-1 246 903 und die US-A-3 185 676 zeigen Farbstoffe, welche zum Teil den in der vorliegenden Anmeldung verwendeten Farbstoffen ähnlich sind. Diesen beiden Patentschriften kann man jedoch keinerlei Hinweis darauf entnehmen, dass die Farbstoffe der Formel I gemäss der vorliegenden Anmeldung zum Färben von Leder besonders gut geeignet sind.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

(Siehe Beispiel 1 Seite 4 f.)

Beispiel 1

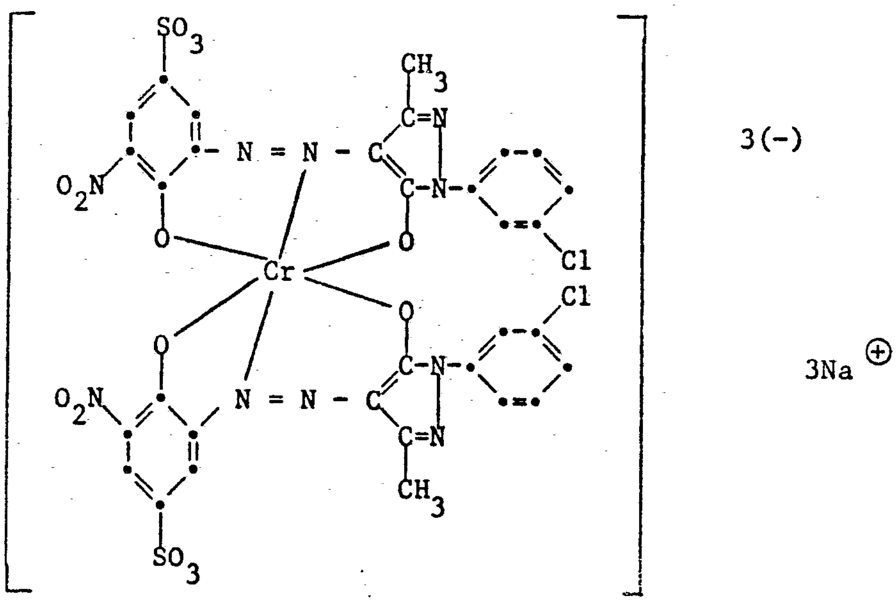

45 Teile des Monoazofarbstoffes, erhalten durch Diazotierung von 6-Nitro-2-amino-1-hydroxybenzol-4-sulfonsäure und Kupplung mit 1-(3'-Chlorphenyl)-3-methylpyrazol-5-on, werden unter Zusatz von 4 Teilen Natriumhydroxid in 1 000 Teilen 80° warmem Wasser gelöst und mit 120 Teilen einer Lösung von chromsalicylsaurem Natrium mit einem Chromgehalt von 2.6 % versetzt und so lange unter Rückfluss gehalten, bis die Chromierung beendet ist. Das Wasser wird am Rotationsverdampfer abgezogen. Der erhaltene Chromkomplex ist ein dunkles Pulver, das sich gut in Wasser löst und Leder in vollen roten Farbtönen mit vorzüglichen Echtheiten färbt.

Beispiel 2

Wird die Metallisierung des im Beispiel 1 verwendeten Monoazofarbstoffes mit entsprechenden Mengen Kobaltsalzen an Stelle von Chromsalzen durchgeführt, so erhält man einen Farbstoff der Leder oder Pelze rotbraun färbt.

Beispiel 3

Arbeitet man wie im Beispiel 1, dampft jedoch die Reaktionslösung nicht am Rotationsverdampfer ein, sondern fällt den Farbstoff durch Zugabe von Kaliumchlorid aus, so erhält man den analogen Farbstoff wie im Beispiel 1, wobei das Natriumion des Farbstoffes grösstenteils durch das Kaliumion ersetzt ist. Der entsprechende Farbstoff färbt Leder in der gleichen Nuance und die resultierenden Echtheiten sind gleichwertig.

Beispiel 4

Verfährt man mit dem entsprechenden Kobaltkomplex aus Beispiel 2 analog wie im Beispiel 3, so erhält man ebenfalls den entsprechenden Farbstoff, jedoch mit Kalium als Kation.

Beispiel 5-14

Arbeitet man wie in den Beispielen 1-4 beschrieben, verwendet jedoch die in der Tabelle I verzeichneten Monoazofarbstoffe, so erhält man nach der Metallisierung mit dem in Spalte 3 angegebenen Metall die entsprechenden 1 : 2 Metallkomplexe, welche Leder in den in Spalte 4 angegebenen Nuancen färben.

(Siehe Tabelle I Seite 5 ff.)

Tabelle I

| Beispiel | Monoazofarbstoff | Metall | Nuance |
|---|---|---|---|
| 5 | 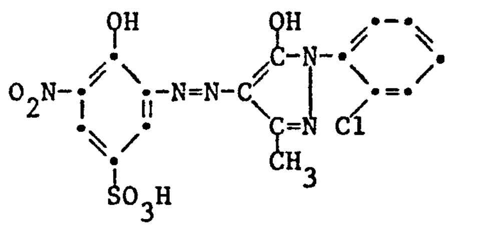 | Cr | rot |
| 6 | 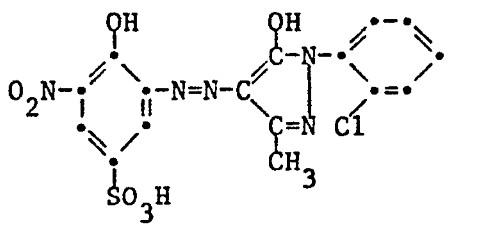 | Co | rotbraun |
| 7 | 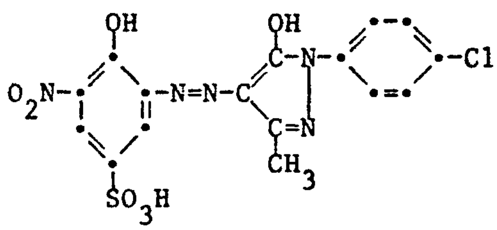 | Co | rotbraun |
| 8 | 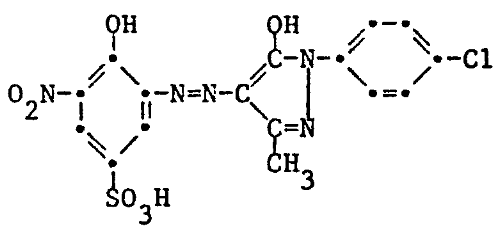 | Cr | rot |
| 9 | 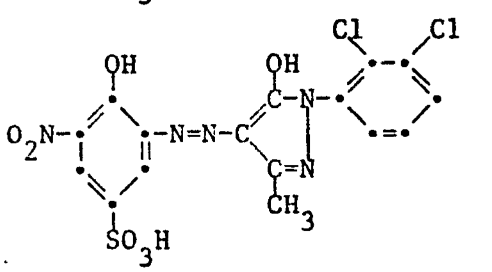 | Cr | rot |
| 10 | 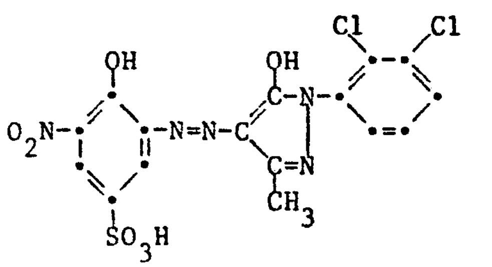 | Co | rotbraun |

Tabelle I (Fortsetzung)

| Beispiel | Monoazofarbstoff | Metall | Nuance |
|---|---|---|---|
| 11 | 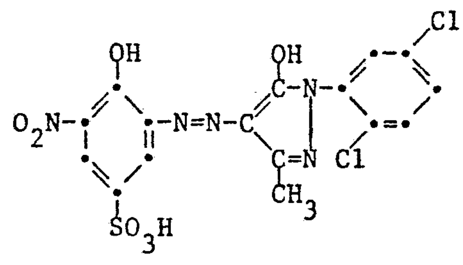 | Co | rotbraun |
| 12 | 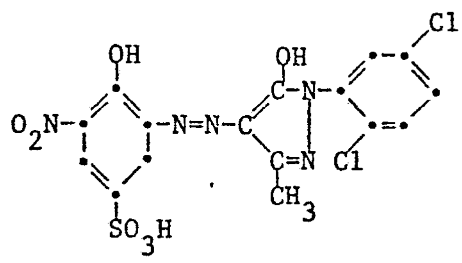 | Cr | rot |
| 13 | 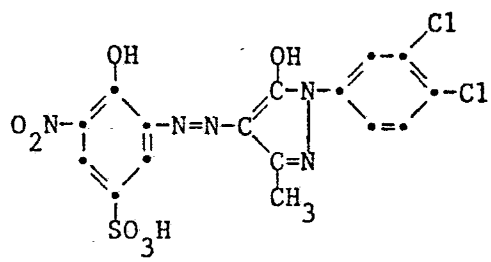 | Cr | rot |
| 14 | 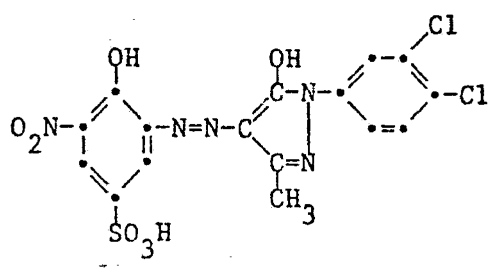 | Co | rotbraun |

Beispiel 15

22,5 Teile des Monoazofarbstoffes, erhalten durch Diazotierung von 6-Nitro-2-amino-1-hydroxybenzol-4-sulfonsäure und Kupplung mit 1-(3'-Chlorphenyl)-3-methylpyrazol-5-on, und 21 Teile des Monoazofarbstoffes, erhalten durch Diazotierung von 6-Nitro-2-amino-1-hydroxybenzol-4-sulfonsäure und Kupplung mit 1-Phenyl-3-methylpyrazol-5-on, werden unter Zusatz von 4 Teilen Natriumhydroxid in 1 000 Teilen 80° warmem Wasser gelöst und wie im Beispiel 1 metallisiert und isoliert. Das erhaltene Farbstoffpulver färbt Wolle, Polyamid und Leder in einem roten Farbton mit vorzüglichen Echtheiten und ist ein Gemisch aus Metallkomplexen der folgenden Formeln :

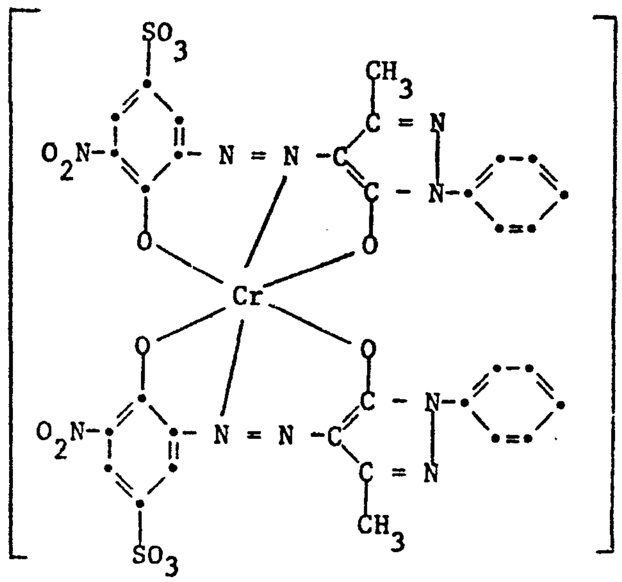

$3^{\ominus}$

$3Na^{\oplus}$

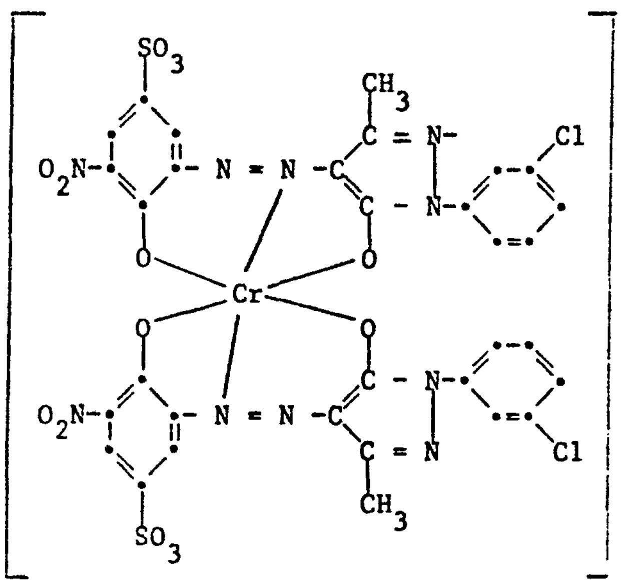

$3^{\ominus}$

$3Na^{\oplus}$

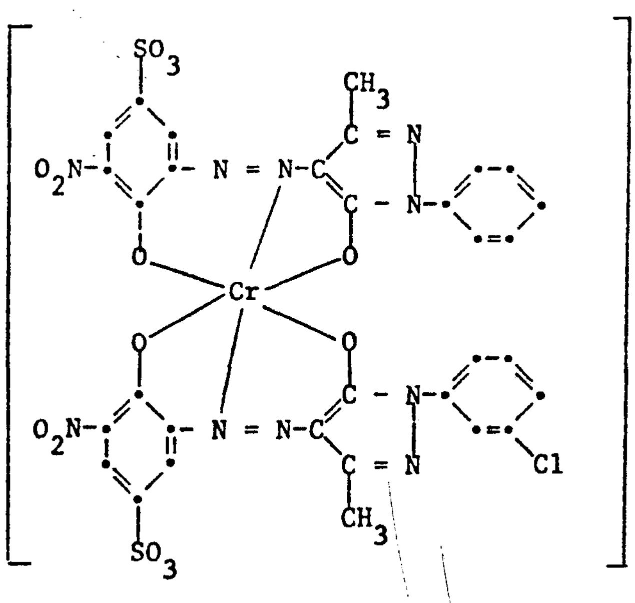

$3^{\ominus}$

$3Na^{\oplus}$

Die entsprechende Farbstoffmischung mit Kalium anstelle von Natrium als Kation, erhält man, wenn man analog wie im Beispiel 3 arbeitet.

Beispiel 16

Wird die Metallisierung der in Beispiel 15 verwendeten Monoazofarbstoffmischung mit den entsprechenden Mengen Kobaltsalzen an Stelle von Chromsalzen durchgeführt, so erhält man analog die Kobaltkomplexe mit den gleichen Liganden wie im Beispiel 15.

Beispiel 17

In 1 000 Teilen Wasser werden nacheinander die komplexe 1 : 1 Chromverbindung, welche 41,9 Teile des Farbstoffes aus diazotierter 6-Nitro-2-aminophenol-4-sulfonsäure und 1-Phenyl-3-methylpyrazol-5-on sowie 5,2 Teile Chrom enthält, und 45 Teile des Monoazofarbstoffes, erhalten durch Diazotierung von 6-Nitro-2-amino-1-hydroxybenzol-4-sulfonsäure und Kupplung mit 1-(3'-Chlorphenyl)-3-methylpyrazol-5-on, eingetragen und auf 80° erwärmt. Der pH-Wert wird mit 2-molarer Natronlauge neutral gehalten. Nach Beendigung der Anlagerung wird das Wasser am Rotationsverdampfer abgezogen. Das erhaltene Farbstoffmuster färbt Leder mit roter Farbe.

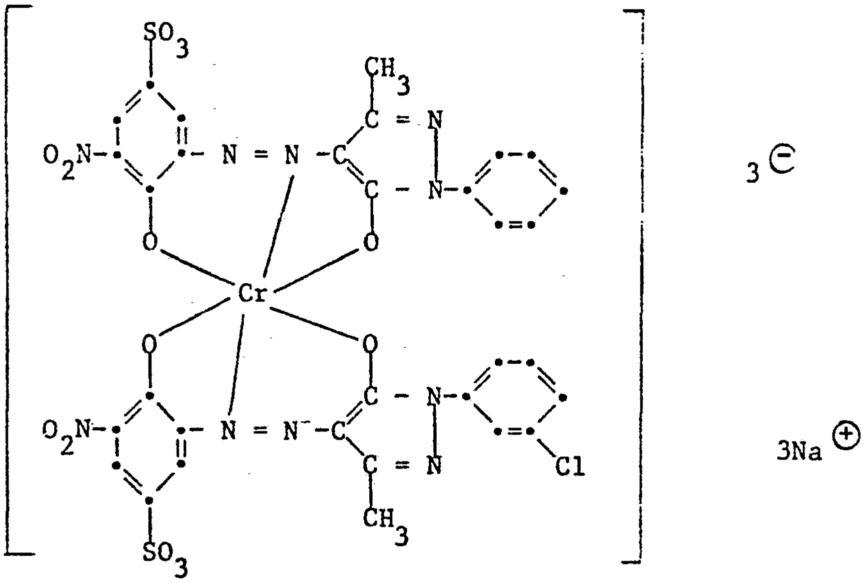

Beim Arbeiten analog Beispiel 3 erhält man den entsprechenden Farbstoff mit Kalium als Kation.

Beispiele 18-25

Verfährt man analog Beispiel 17, verwendet jedoch die in Tabelle II bezeichneten 1 : 1 Chromkomplex- und Monoazofarbstoffe, so erhält man die entsprechenden 1 : 2 Metallkomplexfarbstoffe, welche Leder in den in Spalte 4 angegebenen Nuancen färben.

(Siehe Tabelle II Seite 9 ff.)

Tabelle II

| Beispiel | 1:1 Chromkomplex | Monoazofarbstoff | Nuance |
|---|---|---|---|
| 18 | 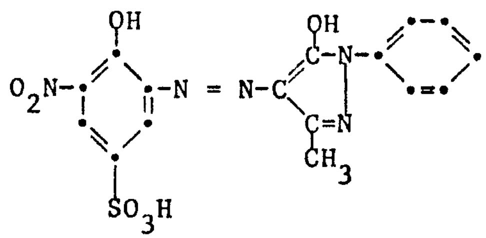 | 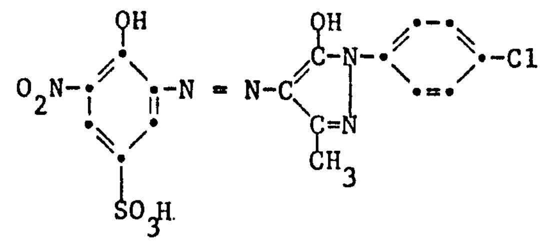 | rot |
| 19 | 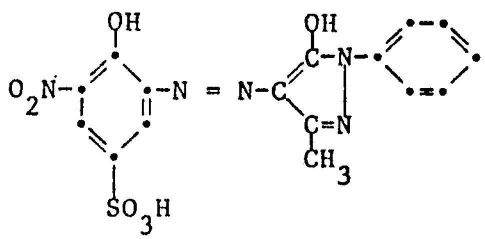 | 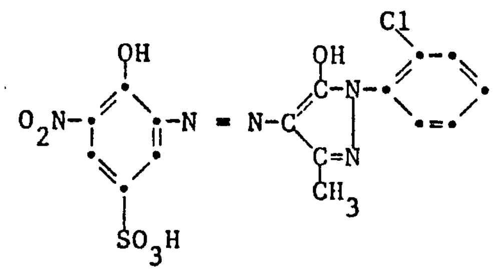 | rot |
| 20 | 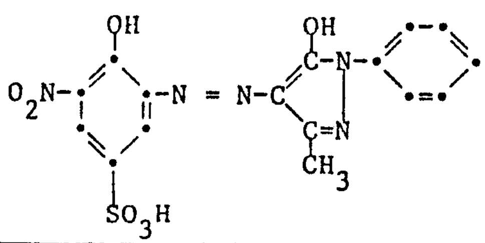 | 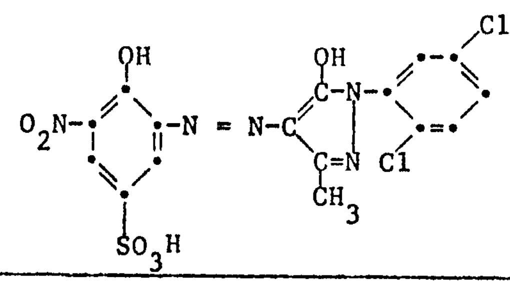 | rot |

Tabelle II (Fortsetzung)

| Beispiel | 1:1 Chromkomplex | Monoazofarbstoff | Nuance |
|---|---|---|---|
| 21 | 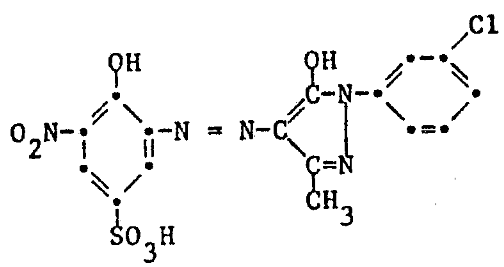 | 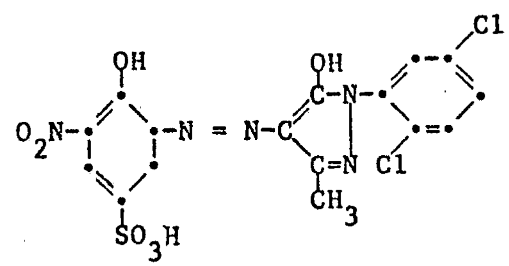 | rot |
| 22 | 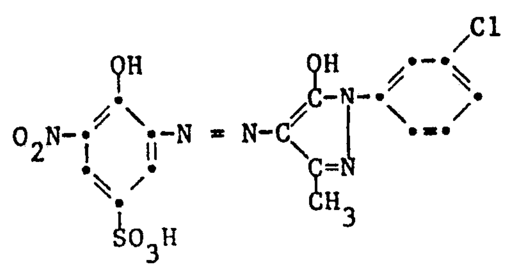 | 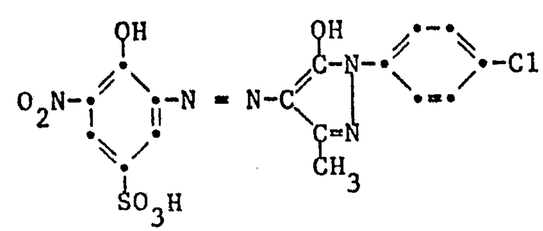 | rot |
| 23 | 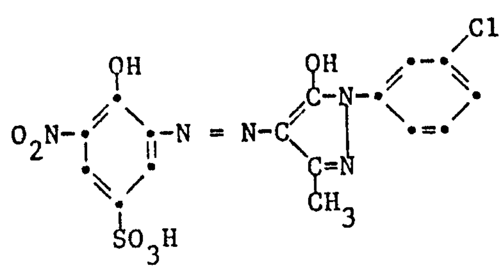 | 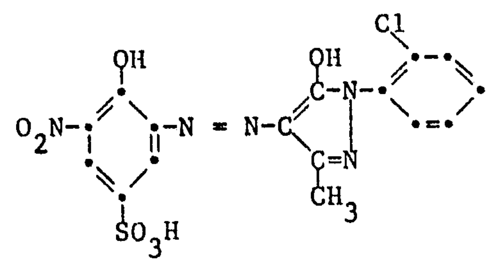 | rot |

Tabelle II (Fortsetzung)

| Beispiel | 1:1 Chromkomplex | Monoazofarbstoff | Nuance |
|---|---|---|---|
| 24 | 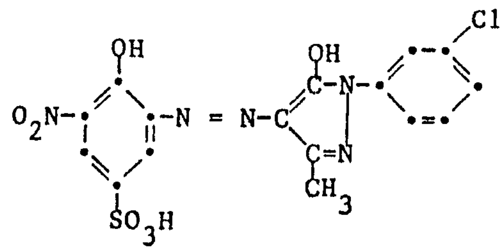 | 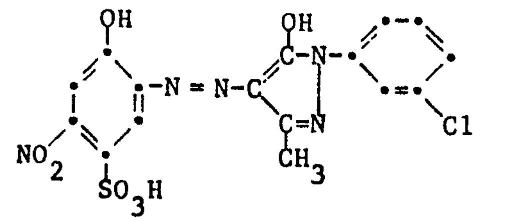 | rotbraun |
| 25 | 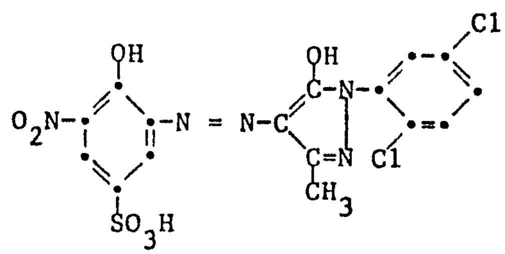 | 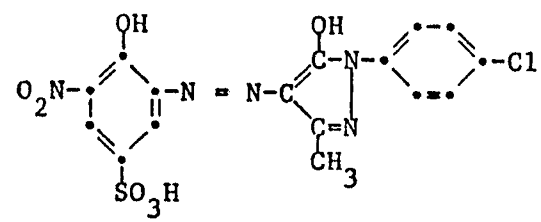 | rot |

Färbevorschrift für Leder

100 Teile Bekleidungsvelourleder weder bei 50° in einer Lösung von 1 000 Teilen Wasser und 2 Teilen 24-%igem Ammoniak während 2 Stunden aufgewalkt und anschliessend bei 60° in einer Lösung von 1 000 Teilen Wasser, 2 Teilen 24-%igem Ammoniak und 3 Teilen des kobaltierten Farbstoffes gemäss Beispiel 2 während 1 Stunde gefärbt. Hierauf gibt man eine Lösung von 40 Teilen Wasser und 4 Teilen 85-%iger Ameisensäure zu und färbt noch weitere 30 Minuten. Dann wird das Leder gut gespült und gegebenenfalls noch mit 2 Teilen eines Dicyandiaminoformaldehydkondensationsproduktes während 30 Minuten bei 50° behandelt. Man erhält eine rotbraune Färbung mit guten Echtheiten.

**Ansprüche**

1. Verwendung von Farbstoffen der Formel I

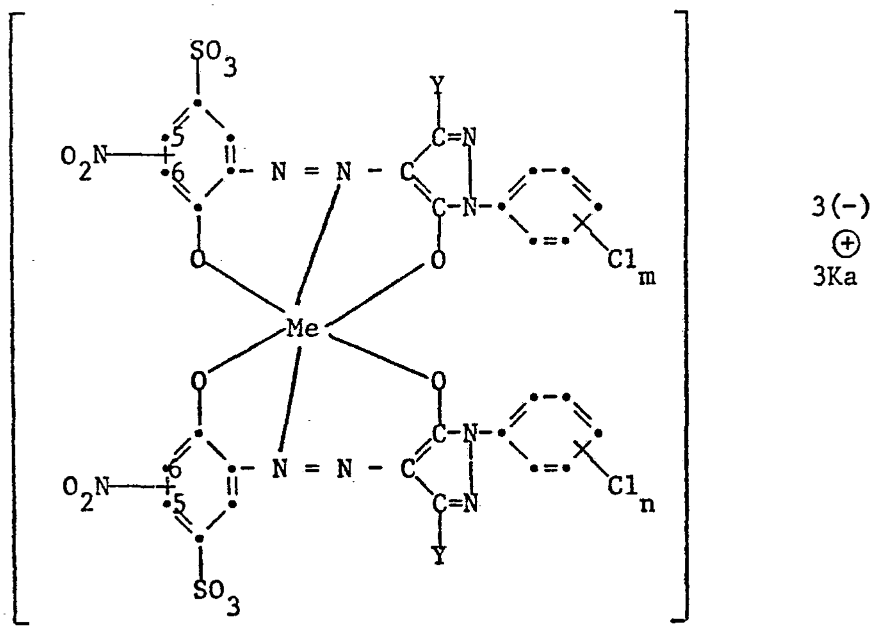

(I)

worin Me Chrom oder Kobalt, Ka® ein Kation, m 1 oder 2, n 0, 1 oder 2 und Y Methyl, —$CONH_2$ oder, —CO—NH—R bedeuten, wobei R eine Alkylgruppe mit 1-4 C-Atomen darstellt und die Nitrogruppen in 5- oder 6-Stellung angeordnet sind, zum Färben von Leder oder Pelzen.

2. Verwendung gemäss Anspruch 1 von Farbstoffen der Formel I, worin die Nitrogruppen in 6-Stellung angeordnet sind.

3. Verwendung gemäss Anspruch 1 oder 2 von Farbstoffen der Formel I, worin m und n jeweils gleich 1 sind.

4. Verwendung gemäss Ansprüchen 1-3 von Farbstoffen der Formel I, worin m und n gleich 1 sind und die beiden Chlor in m-Stellung gebunden sind.

5. Verwendung gemäss Ansprüchen 1-4 von Farbstoffen der Formel I, worin Y Methyl bedeutet.

6. Verwendung gemäss Ansprüchen 1-5 von Farbstoffen der Formel I, worin die Nitrogruppen in 6-Stellung angeordnet sind, m und n gleich 1 sind, wobei die beiden Chlor in m-Stellung gebunden sind, und worin Y Methyl bedeutet.

7. Verwendung von Farbstoffen der Formel I zum Färben von Leder.

**Claims**

1. Use of a dye of formula I

(See Figure page 13)

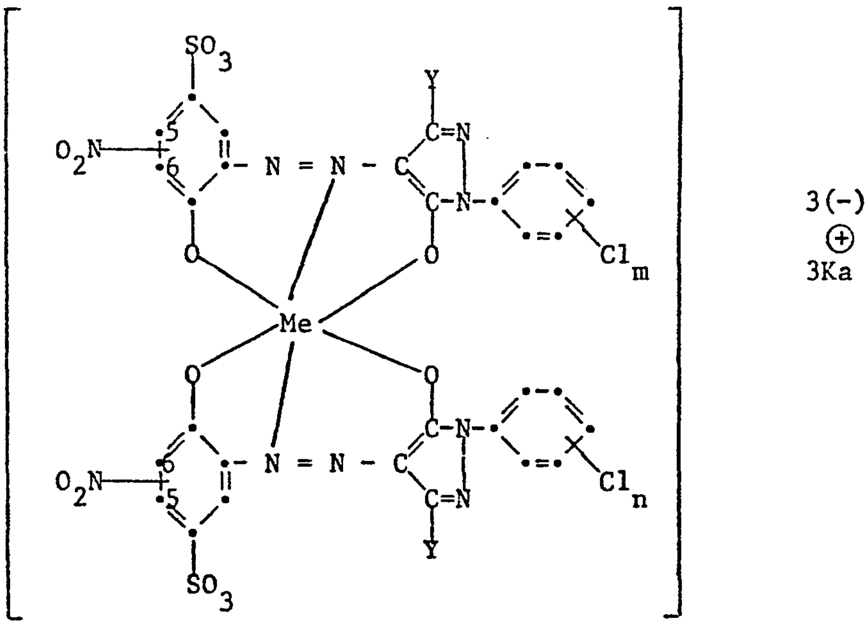

(I),

wherein M is chromium or cobalt, Ka® is a cation, m is 1 or 2, n is 0, 1 or 2 and Y is methyl, —$CONH_2$ or —CO—NH—R, wherein R is $C_1$-$C_4$-alkyl and the nitro groups are located in the 5- or 6-position, for dyeing leather or furs.

2. Use of a dye of formula I according to claim 1, wherein the nitro groups are located in the 6-position.

3. Use of a dye of formula I according to either claim 1 or 2, wherein m and n are each 1.

4. Use of a dye of formula I according to any of claims 1 to 3, wherein m and n are 1 and the two chlorine substituents are attached in the m-position.

5. Use of a dye of formula I according to any one of claims 1 to 4, wherein Y is methyl.

6. Use of a dye of formula I according to any one of claims 1 to 5, wherein the nitro groups are located in the 6-position, m and n are 1 and the two chlorine substituents are attached in the m-position and Y is methyl.

7. Use of a dye of formula I for dyeing leather.

**Revendications**

1. Utilisation des colorants de formule I

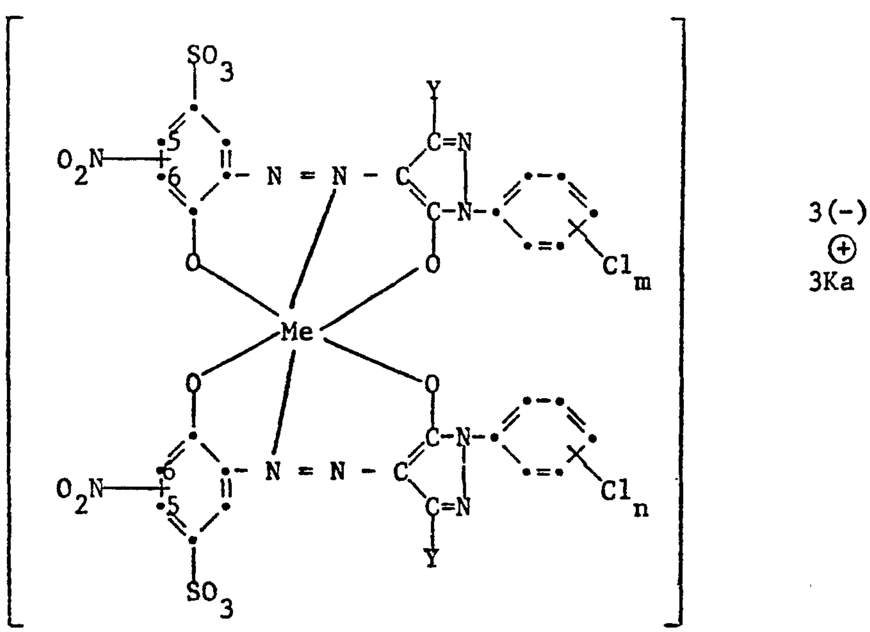

(I),

dans laquelle Me représente le chrome ou le cobalt ; ka® représente un cation ; m est 1 ou 2 ; n est 0, 1 ou 2, et Y est un groupe méthyle, $—CONH_2$ ou —CO—NH—R, où R est un groupe alkyle ayant 1 à 4 atomes de carbone, et les groupes nitro sont placés en position 5 ou 6, pour la teinture du cuir ou des fourrures.

2. Utilisation selon la revendication 1, des colorants de formule I, dans lesquels les groupes nitro sont placés en position 6.

3. Utilisation selon la revendication 1 ou 2, des colorants de formule I, dans lesquels m et n sont chacun égal à 1.

4. Utilisation selon les revendications 1 à 3, des colorants de formule I, dans lesquels m et n sont égaux à 1 et les deux chlore sont fixés en position méta.

5. Utilisation selon les revendications 1 à 4, des colorants de formule I, dans lesquels Y désigne le groupe méthyle.

6. Utilisation selon les revendications 1 à 5, des colorants de formule I, dans lesquels les groupes nitro sont placés en position 6 ; m et n sont égaux à 1 ; les deux chlore étant fixés en position méta, et dans lesquels Y désigne le groupe méthyle.

7. Utilisation des colorants de formule I pour la teinture du cuir.